# EUROPEAN PATENT APPLICATION

(11) **EP 0 890 609 A1**
(43) Date of publication of application: **13.01.1999**
(21) Application number: 98401648.5
(22) Date of filing: 02.07.1998
(51) Int. Cl.: C08L 5/00, C08L 95/00, C08K 5/09, C08K 5/17

(54) **An asphalt modifier and an asphalt composition containing said modifier**

(30) Priority: 09.07.1997 JP 183513/97
(71) Applicant: ELF ATOCHEM S.A., 92800 Puteaux, Hauts-de-Seine (FR)
(72) Inventor: Yamaguchi, Noboru c/o Sumitomo Chemical Co., Ichihara-shi Chiba-Ken (JP); Fujita, Harunori c/o Sumitomo Chemical Co., Ichihara-shi Chiba-Ken (JP)
(74) Representative: Neel, Henry

(57) **Abstract**

[Problem] To offer an asphalt modifier with outstanding solubility in asphalt, and an asphalt composition containing said modifier and asphalt which is outstanding in its adhesion to aggregate.

[Resolution Means] An asphalt modifier which is characterized in that it contains an ethylene copolymer (A) comprising repeating units derived from ethylene and repeating units derived from maleic anhydride, and amine (B-1) represented by the general formula RNH2 (where, in the formula, R denotes an alkyl group with from 10 to 30 carbons) or carboxylic acid (B-2) represented by the general formula RCOOH (where, in the formula, R denotes an alkyl group with from 10 to 30 carbons); and an asphalt composition containing said modifier and asphalt.

## Description

### [Technical Field of the Invention]

The present invention relates to an asphalt modifier and to an asphalt composition containing said modifier.

### [Prior-Art]

As is well-known, resin- or rubber-added asphalt compositions are widely employed for paving, etc. For example, in Japanese Examined Patent Publication No. 2-21421, there is disclosed a composition containing asphalt and an ethylene/alkyl acrylate ester/maleic anhydride terpolymer. This composition suffers from the problems that the adhesion to the aggregate is not altogether adequate and, further, the aforesaid terpolymer has low affinity for the asphalt and requires considerable time for dissolution.

The objectives of the present invention lie in offering an asphalt modifier with outstanding solubility in the asphalt; and an asphalt composition containing said modifier and asphalt which has outstanding adhesion to the aggregate.

### [Means for Resolving the Problem]

The present inventors have carried out considerable investigation into modifiers for adding to asphalt, as a result of which they have discovered that the objectives of the present invention are realised by an asphalt modifier containing specified ethylene copolymer and amine represented by the general formula RNH2 or carboxylic acid represented by the general formula RCOOH, and by a composition containing said modifier, and the present invention has been perfected based on this discovery.

Specifically, the present invention is an asphalt modifier which is characterized in that it contains an ethylene copolymer (A) comprising repeating units derived from ethylene and repeating units derived from maleic anhydride, and amine (B-1) represented by the general formula RNH2 (where, in the formula, R denotes an alkyl group with from 10 to 30 carbons) or carboxylic acid (B-2) represented by the general formula RCOOH (where, in the formula, R denotes an alkyl group with from 10 to 30 carbons).

Further, the present invention is an asphalt composition which is characterized in that it contains 100 parts by weight of asphalt, from 0.1 to 10 parts by weight of ethylene copolymer (A) comprising repeating units derived from ethylene and repeating units derived from maleic anhydride, and from 0.01 to 5 parts by weight of amine (B-1) represented by the general formula RNH2 (where, in the formula, R denotes an alkyl group with from 10 to 30 carbons) or carboxylic acid (B-2) represented by the general formula RCOOH (where, in the formula, R denotes an alkyl group with from 10 to 30 carbons).

Below, the present invention is explained in detail.

### [Practical Configuration of the Invention]

The asphalt modifier of the present invention contains an ethylene copolymer (A) comprising repeating units derived from ethylene (hereinafter referred to as 'ethylene units') and repeating units derived from maleic anhydride (hereinafter referred to as 'maleic anhydride units'), and an amine (B-1) represented by the general formula RNH2 (where, in the formula, R denotes an alkyl group with from 10 to 30 carbons) or a carboxylic acid (B-2) represented by the general formula RCOOH (where, in the formula, R denotes an alkyl group with from 10 to 30 carbons).

The content of the ethylene units in the aforesaid ethylene copolymer is from 90 to 99.9 wt% and preferably from 95 to 99 wt%, and the content of the maleic anhydride units is from 10 to 0.1 wt% and preferably from 5 to 1 wt%.

Further, aforesaid ethylene copolymer (A) is preferably an ethylene terpolymer comprising ethylene units, maleic anhydride units and repeating units derived from ethylenically unsaturated ester (hereinafter referred to as 'ethylenically unsaturated ester units').

As examples of the aforesaid ethylenically unsaturated ester, there can be cited vinyl acetate and the alkyl esters of α,β-unsaturated carboxylic acids. The alkyl esters of α,β-unsaturated carboxylic acids are the alkyl esters of unsaturated carboxylic acids with from 3 to 8 carbons such as acrylic acid and methacrylic acid, and as specific examples there can be cited methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl meth-acrylate, t-butyl methacrylate and isobutyl methacrylate. Of these, vinyl acetate, methyl acrylate, ethyl acrylate, n-butyl acrylate and methyl methacrylate are preferred.

In the case where the ethylene copolymer is an ethylene terpolymer, the content of the ethylene units is from 40 to 99.9 wt% and preferably from 55 to 96 wt%, the content of the maleic anhydride units is from 10 to 0.1 wt% and preferably from 5 to 1 wt%, and the content of the ethylenically unsaturated ester units is from 0 to 50 wt% and preferably from 3 to 40 wt%.

Further, the melt flow rate (MFR) of the ethylene copolymer measured at 190°C under a 2.16 kg load is preferably from 0.1 to 1000 g/10 minutes, and more preferably from 2 to 400 g/10 minutes. Here, if said MFR is too small, solubility may be impaired, while if said MFR is too great then the adhesive strength in terms of the aggregate may be impaired.

Straight chain or branched amines or carboxylic acids may be cited as the amine (B-1) represented by the general formula RNH2 (where, in the formula, R denotes an alkyl group with from 10 to 30 carbons, preferably 14 to 26 carbons) or carboxylic acid (B-2) represented by the general formula RCOOH (where, in the formula, R denotes an alkyl group with from 10 to 30 carbons, preferably 14 to 26 carbons) employed in the present invention.

As examples of the amine represented by the general formula RNH2, there may be cited decylamine, dodecylamine, tetradecylamine, stearylamine and hexadecylamine. Of these, stearylamine is preferred.

As the carboxylic acid represented by general formula RCOOH, there may be cited decanoic acid, lauric acid, myristic acid, palmitic acid, stearic acid, eicosanoic acid, behenic acid and cerotic acid. Of these, stearic acid is preferred.

Further, the asphalt composition of the present invention contains the aforesaid asphalt modifier and asphalt.

The asphalt is not particularly restricted, and examples are straight asphalt for paving, lake asphalt and other such natural asphalts, semi-blown asphalt, straight asphalt modified using some blown asphalt, tar-modified straight asphalt and the like, with one type of these or mixtures of two or more types being used.

The ethylene copolymer (A) content per 100 parts by weight of the asphalt is from 0.1 to 10 parts by weight and preferably from 0.5 to 5 parts by weight. Where the content is less than 0.1 part by weight, the adhesive strength in terms of the aggregate is lowered, while if it exceeds 10 parts by weight then the solubility is impaired.

The aforesaid amine or aforesaid carboxylic acid content per 100 parts by weight of the asphalt is from 0.01 to 5 parts by weight, preferably from 0.01 to 2 parts by weight and more preferably from 0.05 to 0.5 parts by weight. If the content is less than 0.01 part by weight, the solubility is impaired, while if it exceeds 5 parts by weight the adhesive strength in terms of the aggregate is lowered.

Preferably, the aforesaid amine (B-1) or aforesaid carboxylic acid (B-2) content is from 0.01 to 2 parts by weight and, moreover, the weight ratio of the ethylene copolymer (A) to aforesaid amine (B-1) or aforesaid carboxylic acid (B-2) lies in the range 99.9 - 80.0 : 0.1 - 20, with the range 99 - 90 : 1 - 10 still further preferred.

The asphalt composition of the present invention can also include known modifiers of various kinds within a range such that the objectives are not impeded, and rubber, thermoplastic elastomers and other ethylene copolymers can be cited as examples of such modifiers. Amongst such other ethylene copolymers, ethylene/ethylenically un-saturated ester copolymers are especially preferred because of their outstanding compatibility with the asphalt modifier of the present invention.

The method of obtaining the asphalt composition of the present invention is not especially restricted and it will be satisfactory if the asphalt modifier of the present invention is added to the asphalt while heating, but it is preferred that the ethylene copolymer (A) and the aforesaid amine (B-1) or aforesaid carboxylic acid (B-2) be mixed together beforehand, after which addition is made to the asphalt.

### [Effects of the Invention]

As explained in detail above, in accordance with the present invention there can be provided an asphalt modifier with outstanding solubility in the asphalt.

Further, in accordance with the present invention there can be provided an asphalt composition with high adhesive strength to the aggregate and which is also outstanding in its solubility characteristics.

### [Examples]

Below, the present invention is explained based on examples but the present invention is not to be restricted to these.

The methods of measuring the properties in the examples and comparative examples were as follows.

### (1) Asphalt penetration

This was measured in accordance with the method specified in JIS K2207.

### (2) Melt flow rate (MFR)

This was measured in accordance with the method specified in JIS K6760.

### (3) Content of ethylene units, ethyl acrylate units and maleic anhydride units

A pressed sheet was prepared, then the absorbance at characteristic absorptions in the infrared absorption spectrum determined and, after correcting for thickness, determination was performed by means of a calibration curve method. The characteristic absorptions employed were the peak at 3450 cm-1 in the case of ethyl acrylate and that at 1790 cm-1 in the case of maleic anhydride. The content of the ethylene units was determined by subtracting the contents of the aforesaid comonomer structural components from 100 wt%.

### (4) Adhesion to aggregate

This was determined in accordance with the method specified in the static stripping test of the Asphalt Paving Stipulations {Asphalt *Hoso Yoko*}.

As the sample, asphalt, copolymer and amine or carboxylic acid were mixed together at 180°C, and then the mixture employed in the evaluations.

In regard to the stripped state, this was assessed by eye based on four levels, I (0%), II (5 to 12%), III (12 to 28%) and IV (28%+), according to the pattern classification table for the stripped states described in the Joint Test Report No. 6 relating to the stripping of paving asphalt, published by the Japan Petroleum Institute.

O% means the aggregate remains completely covered by the asphalt.

### (5) Solubility in the asphalt

The mixing time until no undissolved material remained was measured when adding the modifier to the asphalt. This dissolution test was continued up to 2 hours, and where more than this time was required the material was designated as 'insoluble'. The mixing temperature at this time was 180°C.

### Example 1

A mixture containing, as the ethylene copolymer, 95 wt% of ethylene terpolymer (A-1) comprising 91 wt% ethylene units, 3 wt% maleic anhydride units and 6 wt% ethyl acrylate units (MFR = 5 g/10 min), and, as amine, 5 wt% of stearylamine (B-1), was subjected to kneading at 60 rpm for 5 minutes at 120°C in a laboratory Plastomill (internal mixer), and modifier obtained. 2 parts by weight of this modifier was then added to 100 parts by weight of asphalt (penetration = 70) and an asphalt composition obtained. The mixing temperature at this time was 180°C. The proportion by weight of each of the components in the final composition was 100 parts by weight of the asphalt, 1.9 part by weight of the ethylene copolymer and 0.1 part by weight of the stearylamine.

Using the asphalt composition thus obtained, a stripping test was conducted in terms of aggregate (No.6 crushed stone). The evaluation results are shown in Table 1.

### Example 2

The same method as in Example 1 was repeated except that there was used 4 wt% of stearylamine (B-1) and 96 wt% of an ethylene terpolymer (A-2) comprising 69 wt% ethylene units, 3 wt% maleic anhydride units and 28 wt% ethyl acrylate units (MFR = 40 g/10 min) instead of the ethylene copolymer in Example 1. The proportion by weight of each of the components in the final composition was 100 parts by weight of the asphalt, 1.92 part by weight of the ethylene copolymer and 0.08 part by weight of the stearylamine. The evaluation results are shown in Table 1.

### Example 3

The same method as in Example 1 was repeated except that there was used 94 wt% of an ethylene terpolymer (A-3) comprising 85 wt% ethylene units, 3 wt% maleic anhydride units and 12 wt% ethyl acrylate units (MFR = 3 g/10 min) instead of the ethylene copolymer in Example 1, and, as carboxylic acid, there was used 6 wt% of stearic acid (B-2). The proportion by weight of each of the components in the final composition was 100 parts by weight of the asphalt, 1.88 part by weight of the ethylene copolymer and 0.12 part by weight of the stearic acid. The evaluation results are shown in Table 1.

### Comparative Example 1

In Example 1, no (B-1) component was used, and the method was conducted with only the ethylene copolymer and the asphalt. The proportion by weight of each of the components in the final composition was 100 parts by weight of the asphalt and 2 parts by weight of the ethylene copolymer. The evaluation results are shown in Table 1.

### Comparative Example 2

In Example 3, no (B-2) component was used, and the method was conducted with only the ethylene copolymer and the asphalt. The proportion by weight of each of the components in the final composition was 100 parts by weight of the asphalt and 2 parts by weight of the ethylene copolymer. The evaluation results are shown in Table 1.

**[Table 1]**

| | **Example Number** | | | **Comparative Example Number** | |
|---|---|---|---|---|---|
| | 1 | 2 | 3 | 1 | 2 |
| Dissolution time (mins) | 20 | 10 | 110 | insoluble | insoluble |
| Stripping Property | I | I | I | * | * |

| | | | | | |
|---|---|---|---|---|---|
| *Insoluble so measurement not possible | | | | | |

## Claims

1. An asphalt modifier which is characterized in that it contains an ethylene copolymer (A) comprising repeating units derived from ethylene and repeating units derived from maleic anhydride, and amine (B-1) represented by the general formula RNH2 (where, in the formula, R denotes an alkyl group with from 10 to 30 carbons) or carboxylic acid (B-2) represented by the general formula RCOOH (where, in the formula, R denotes an alkyl group with from 10 to 30 carbons).

2. An asphalt modifier according to Claim 1 where ethylene copolymer (A) is an ethylene terpolymer comprising repeating units derived from ethylene, repeating units derived from maleic anhydride and repeating units derived from ethylenically unsaturated ester.

3. An asphalt modifier according to Claim 1 where the (B-1) of general formula RNH2 is stearylamine.

4. An asphalt modifier according to Claim 1 where the (B-2) of general formula RCOOH is stearic acid.

5. An asphalt composition which is characterized in that it contains 100 parts by weight of asphalt, from 0.1 to 10 parts by weight of ethylene copolymer (A) comprising repeating units derived from ethylene and repeating units derived from maleic anhydride, and from 0.01 to 5 parts by weight of amine (B-1) represented by the general formula RNH2 (where, in the formula, R denotes an alkyl group with from 10 to 30 carbons) or carboxylic acid (B-2) represented by the general formula RCOOH (where, in the formula, R denotes an alkyl group with from 10 to 30 carbons).

6. An asphalt composition according to Claim 5 where ethylene copolymer (A) is an ethylene terpolymer comprising repeating units derived from ethylene, repeating units derived from maleic anhydride and repeating units derived from ethylenically unsaturated ester.

7. An asphalt composition according to Claim 5 where the (B-1) of general formula RNH2 is stearylamine.

8. An asphalt composition according to Claim 5 where the (B-2) of general formula RCOOH is stearic acid.

9. An asphalt composition according to Claim 5 where the amount of (B-1) of general formula RNH2 or (B-2) of general formula RCOOH present is from 0.01 to 2 parts by weight and, moreover, the weight ratio of ethylene copolymer (A) to aforesaid amine (B-1) or aforesaid carboxylic acid (B-2) lies in the range 99.9 - 80 : 0.1 - 20.
